# EUROPÄISCHE PATENTSCHRIFT

(11) **EP 3 610 478 B1**
(45) Veröffentlichungstag und Bekanntmachung des Hinweises auf die Patenterteilung: **18.12.2024**
(21) Anmeldenummer: 18716949.5
(22) Anmeldetag: 29.03.2018
(51) Int. Cl.: F16F 7/10, G10K 9/13, G10K 9/20, H04R 1/28, B60R 11/02

(54) **KÖRPERSCHALLAKTUATOR FÜR EIN KRAFTFAHRZEUG UND KRAFTFAHRZEUG**
STRUCTURE-BORNE SOUND ACTUATOR FOR A MOTOR VEHICLE, AND MOTOR VEHICLE
ACTIONNEUR DE BRUIT SOLIDIEN POUR VÉHICULE AUTOMOBILE ET VÉHICULE AUTOMOBILE

(30) Priorität: 10.04.2017 DE 102017206079
(43) Veröffentlichungstag der Anmeldung: 19.02.2020
(73) Patentinhaber: Continental Automotive Technologies GmbH, 30175 Hannover (DE)
(72) Erfinder: PATSOURAS, Dimitrios, 65824 Schwalbach a. Ts. (DE); JOEST, Robert, 65824 Schwalbach a. Ts. (DE); KERKMANN, Johannes, 65824 Schwalbach a. Ts. (DE); FRIEDRICH, Jens, 65824 Schwalbach a. Ts. (DE); BOCK, Roland, 65824 Schwalbach a. Ts. (DE); GALLNER, Thomas, 65824 Schwalbach a. Ts. (DE)
(74) Vertreter: Continental Corporation
(86) Internationale Anmeldenummer: PCT/EP2018/058084
(87) Internationale Veröffentlichungsnummer: WO 2018/188963

(56) Entgegenhaltungen:
- EP-A1- 2 839 990
- EP-A1- 3 095 530
- DE-A1- 102010 005 138
- DE-A1- 102015 109 281
- DE-C- 694 771
- RU-C1- 2 029 444
- US-A- 5 884 736
- US-A1- 2016 107 568

## Beschreibung

Körperschallaktuator für ein Kraftfahrzeug und Kraftfahrzeug Die Erfindung betrifft einen Körperschallaktuator für ein Kraftfahrzeug, welcher eine elektrodynamische Anregeeinheit umfasst. Die Anregeeinheit ist mit einer Anregeseite eingerichtet zum Anregen eines Schallkörpers ausgebildet. Die Erfindung betrifft auch ein Kraftfahrzeug mit einem dementsprechenden Körperschallaktuator.

US 5 884 736 A offenbart die Merkmale des Oberbegriffes des Anspruchs 1.

Körperschallaktuatoren sind aus dem Stand der Technik bekannt. Um Flächen nach dem Biegewellenprinzip akustisch anzuregen, werden im Audiobereich Körperschallaktuatoren verwendet. Diese Aktuatoren gleichen in ihrer Funktionsweise konventionellen Lautsprechern mit Membran, da beiden ein elektrodynamisches Wandlerprinzip zu Grunde liegt. Im Aufbau unterscheiden sich beide Systeme dahingehend, dass Körperschallaktuatoren keine Membran, keine Sicke und kein Lautsprecherkorb aufweisen und dadurch deutlich leichter und kleiner ausfallen im Vergleich zu konventionellen Lautsprechern mit Membran. Allerdings benötigen Körperschallaktuatoren üblicherweise eine geeignete Anregungsfläche zur Schallabstrahlung.

Zur breitbandigen Abstrahlung von Schallwellen müssen Aktuatoren daher an eine geeignete Fläche bzw. an einen Schallkörper angekoppelt werden. Durch diese Ankopplung wird eine Übertragung der vom Aktuator erzeugten Schwingungen in dem Schallkörper bzw. Klangkörper realisiert. Dadurch bilden sich in der gesamten Anregungsfläche Biegeschwingungen aus. Hörbar werden diese durch den vom schwingenden Schallkörper angeregten Luftschall.

Die Art der Ankopplung des Aktuators an den Schallkörper ist daher für eine optimale Übertragung und einen hohen Wirkungsgrad des Schwingungssystems entscheidend. Derzeit übliche Körperschallaktuatoren werden häufig mit einer Klebeverbindung oder Schraubverbindung direkt an der anzuregenden Fläche bzw. dem Schallkörper befestigt. Hierfür wird zwischen dem fixierten Teil des Aktuators und der Fläche eine direkte Verbindung geschaffen, die meist mit ihren Abmessungen dem Durchmesser des Spulenträgers bzw. des Magneten entspricht. Diese Form der direkten Ankopplung erfüllt vorwiegend den Zweck einer langzeitstabilen Befestigung zwischen der Anregungsquelle bzw. dem Körperschallaktuator und dem Schallkörper selbst.

Es ist Aufgabe der vorliegenden Erfindung, einen Körperschallaktuator und ein Kraftfahrzeug zu schaffen, mit welchem ein Schallkörper effektiver angeregt werden kann.

Diese Aufgabe wird durch einen Körperschallaktuator und ein Kraftfahrzeug gemäß den unabhängigen Ansprüchen gelöst.

Ein erfindungsgemäßer Körperschallaktuator für ein Kraftfahrzeug umfasst eine elektrodynamische Anregeeinheit. Insbesondere umfasst der Körperschallaktuator ein Gehäuse und eine Energieversorgungsschnittstelle. Die Anregeeinheit ist mit einer, insbesondere flächigen, Anregeseite ausgebildet. Die Anregeseite ist eingerichtet zum Anregen eines Schallkörpers. Ein wichtiger Gedanke ist, dass ein akustisch starres Zwischenelement an der Anregeseite befestigt ist und das Zwischenelement eine der Anregeseite abgewandte Ankopplungsseite, welche zum Koppeln mit dem Schallkörper eingerichtet ist, aufweist.

Der Erfindung liegt die Erkenntnis zu Grunde, dass durch vielfältig ausgebildete Zwischenelemente, welche zwischen der Anregeeinheit und dem Schallkörper angeordnet sind, Einfluss auf ein vom Schallkörper abgegebenes Geräusch genommen werden kann. So kann beispielsweise Einfluss auf eine Frequenz und/oder eine Lautstärke des Geräusches genommen werden. Die Frequenz kann beispielsweise erhöht oder verringert werden. Es können aber beispielsweise auch bestimmte Frequenzbänder des Geräusches hervorgehoben oder reduziert oder unterdrückt werden. Die genaue Anpassung des Geräusches hängt von der Ausbildung des Zwischenelements ab.

So kann das Zwischenelement beispielsweise derart geformt sein, dass ein mittlerer Abschnitt des (Hör-)Frequenzbands des vom Schallkörper abgegebenen Geräusches erhöht wird. Das Zwischenelement kann dazu in vielfältigen Formen und/oder mit vielfältigen Materialien ausgebildet sein.

Insbesondere ist allerdings vorgesehen, dass das Zwischenelement derart zwischen der Anregeeinheit und dem Schallkörper befestigt ist, dass eine Anregebewegung der Anregeeinheit an das Zwischenelement abgegeben werden kann und die Anregebewegung von dem Zwischenelement an den Schallkörper weitergegeben werden kann. Die Anregeeinheit und der Schallkörper sind dabei, insbesondere ausschließlich, über das Zwischenelement verbunden. Zwischen der Anregeeinheit und dem Schallkörper besteht also insbesondere kein direkter Kontakt.

Das Zwischenelement ist akustisch starr ausgebildet. Das bedeutet insbesondere, dass von dem Zwischenelement selbst im Wesentlichen kein Hörschall also kein Schall zwischen 16 Hz bis 20 kHz abgegeben wird. Insbesondere ist das Zwischenelement derart starr ausgebildet, dass durch die Anregeeinheit im Wesentlichen keine Biegewellen im Zwischenelement entstehen, die abgestrahlt werden. Darunter ist insbesondere zu verstehen, dass im eingebauten Zustand des Körperschallaktuators zumindest 95 %, vorzugsweise zumindest 98 %, der Schallleistung des Körperschallaktuators vom Schallkörper abgegeben wird. Vom Zwischenelement wird folglich insbesondere lediglich höchstens 5 %, vorzugsweise höchstens 2 %, der Schallleistung des Körperschallaktuators abgegeben.

Das Zwischenelement ist dabei vorzugsweise mit einem beweglichen Zylinder beziehungsweise einem beweglichen Spulenelement der Anregeeinheit verbunden. Ergänzend oder alternativ kann das Zwischenelement aber auch mit anderen Teilen der Anregeeinheit oder aber mit einem Gehäuse des Körperschallaktuators verbunden sein.

Erfindungsgemäß ist es vorgesehen, dass das Zwischenelement flächig ausgebildet ist und eine Fläche der Ankopplungsseite größer oder gleich groß als eine Fläche der Anregeseite ist. Durch die flächenmäßig größere Ankopplungsseite kann die Anregebewegung auch in einem flächenmäßig größeren Bereich des Schallkörpers eingebracht werden, als dies bei direkter Ankopplung von der Anregeeinheit mit dem Schallkörper der Fall wäre. Vorteilhaft ist es auch, dass die Anregeeinheit selbst trotz der durch das Zwischenelement größeren Fläche der Ankopplungsseite immer noch klein und platzsparend ausgebildet sein kann.

Weiterhin ist es erfindungsgemäß vorgesehen, dass das Zwischenelement mit einer Vorspannung ausgebildet ist und die Ankopplungsseite im entkoppelten Zustand, insbesondere konkav von der Anregeseite abgewandt, gekrümmt ist. Durch die Vorspannung wird ein unterschiedlicher Druck von dem Zwischenelement auf den Schallkörper ausgeübt. Der Druck bzw. die von dem Zwischenelement auf den Schallkörper abgegebene Kraft ist je nach Vorspannung des Zwischenelements verschieden. Ist das Zwischenelement beispielsweise konkav entgegengesetzt zur Anregeseite ausgebildet, so wird im Randbereich des Zwischenelements eine höhere Kraft auf den Schallkörper ausgeübt, als es beispielsweise in einem mittleren Bereich der Ankopplungsseite der Fall ist. Dies ist beispielsweise zutreffend, falls der Schallkörper eben beziehungsweise flach ausgebildet ist. Ist der Schallkörper ebenfalls gekrümmt ausgebildet, so bietet die Vorspannung noch den Vorteil, dass sich das Zwischenelement an den gekrümmt ausgebildeten Schallkörper großflächig anlegen kann.

Weiterhin ist es vorzugsweise vorgesehen, dass das Zwischenelement in der Ebene der Ankopplungsseite ein rechteckiges Mittelstück mit zumindest zwei voneinander beabstandeten und vom Mittelstück, insbesondere radial, abgehenden Stege aufweist. Die Stege sind vorzugsweise gleichförmig ausgebildet und das Mittelstück ist vorzugsweise quadratisch ausgebildet. Die Stege erstrecken sich in Richtung, die ausgehend von der Mitte des Zwischenelements gleichwinklig verteilt sind. Weiterhin ist es vorzugsweise vorgesehen, dass die Stege mit gleichem Abstand zueinander von dem Mittelstück abgehen. Bei vier an dem Mittelstück angeordneten Stegen ergibt sich dann eine Kreuzform, wodurch das Zwischenelement dann kreuzförmig ausgebildet ist. Das Mittelstück und die Stege erstrecken sich insbesondere in derselben Ebene. Vorteilhaft ist die Ausbildung des Zwischenelements mit dem Mittelstück und den Stegen deshalb, da durch die Stege ein Bewegungsenergieeinkopplungsort am Schallkörper in vielfältiger Weise bestimmt werden kann. So können die Stege an dem Mittelstück beispielsweise derart befestigt werden, dass diese in einem bestimmten Winkel von dem Mittelstück abgehen und auch beispielsweise unterschiedliche Längen aufweisen. Dadurch kann die Bewegungsenergie bzw. die Schwingung von der Anregeeinheit über das Zwischenelement besonders präzise und situationsgerecht in den Schallkörper eingeleitet werden.

Weiterhin ist es vorzugsweise vorgesehen, dass das Zwischenelement zumindest zwei von der Anregeseite der Anregeeinheit weg gerichtete Stege aufweist und die Ankopplungsseite nur durch von der Anregeseite weg gerichtete Enden der Stäbe ausgebildet ist. In dieser Ausführungsform ist das Zwischenelement quasi dreidimensional ausgebildet. Das Zwischenelement kann dabei auch eine Vielzahl von weg gerichteten Stäben aufweisen. Durch die Stäbe erscheint das Zwischenelement dann beispielsweise spinnenförmig oder krakenförmig, so dass die Stäbe einen dreidimensionalen Luftraum zumindest teilweise umgreifen. Die Stäbe können dabei einfach oder mehrfach gekrümmt ausgebildet sein. Es ist aber auch möglich, dass die Stäbe gerade ausgebildet sind. Vorzugsweise ist allerdings vorgesehen, dass lediglich das jeweils von der Anregeseite weg gerichtete Ende des jeweiligen Stabs als Ankopplungsseite ausgebildet ist und somit ausschließlich das Ende mit dem Schallkörper kontaktiert ist. Die Schwingungsenergie wird dadurch nur an den Stellen in den Schallkörper eingebracht, an welchem die Enden der Stäbe mit dem Schallkörper in Kontakt stehen. Vorteilhaft ist dies, da dadurch mit komplexen Formen ausgebildete Schallkörper anwendungsgerecht und effektiv zum Einbringen der Schwingungsenergie von der Anregeeinheit gekoppelt werden können.

Weiterhin ist es vorzugsweise vorgesehen, dass das Zwischenelement mit zumindest zwei zur Ankopplungsseite gleichmäßig beabstandet verlaufenden, insbesondere mit unterschiedlichen Werkstoffen ausgebildeten, Materialschichten ausgebildet ist. Durch die unterschiedlichen Materialschichten kann beispielsweise eine Vorspannung des Zwischenelements erzeugt werden. Durch die unterschiedlichen Materialschichten ist es aber auch möglich eine von der Anregeeinheit abgegebene Frequenz anzupassen und somit auf das vom Schallkörper abgegebene Geräusch einzuwirken. Das Zwischenelement kann auch aus mehr als zwei Materialschichten ausgebildet sein.

Vorzugsweise ist es vorgesehen, dass die Materialschichten mit unterschiedlichen Werkstoffen ausgebildet sind. Die unterschiedlichen Werkstoffe können beispielsweise verschiedene Kunststoffe, Kunststoffmischungen, Plexiglas, Aluminium, Ureol, Karbon, Holz oder Glasfaser umfassen. Durch die unterschiedlichen Werkstoffe kann die Frequenz der Anregeeinheit angepasst werden und in angepasster Art an den Schallkörper abgegeben werden.

Weiterhin ist es vorzugsweise vorgesehen, dass das Zwischenelement einen auf einer der Ankopplungsseite gegenüberliegenden Seite erhaben ausgebildeten, insbesondere zylinderförmigen, Montagebereich eingerichtet zum Anbringen des Zwischenelements an der Anregeeinheit aufweist. Durch den Montagebereich kann das Zwischenelement einfacher und fester an der Anregeeinheit befestigt werden. So kann das Zwischenelement beispielsweise derart ausgebildet sein, dass lediglich der Montagebereich an der Anregeseite der Anregeeinheit befestigbar ist. Die Ausgestaltung des Montagebereichs kann aber auch einen Einfluss auf die Anpassung der Frequenz der von der Anregeeinheit abgegebenen Bewegungsenergie ausüben. Insbesondere ist der Montagebereich zylinderförmig ausgebildet. Der Zylinder ist dabei vorzugsweise derart ausgebildet, dass eine Rotationsachse des Zylinders senkrecht auf der Anregeseite der Anregeeinheit zu stehen kommt.

Weiterhin ist es vorzugsweise vorgesehen, dass das Zwischenelement mit einer zerstörungsfrei wieder lösbaren Verbindung, insbesondere mit einer Schraubverbindung, an der Anregeseite der Anregeeinheit befestigt ist. Durch die zerstörungsfrei wieder lösbare Verbindung kann das Zwischenelement beispielsweise an verschiedenen Anregeeinheiten befestigt werden. So kann die Anregeeinheit beispielsweise im Störungsfall durch eine neue Anregeeinheit ersetzt werden. Das Zwischenelement wird dann nicht zerstört oder beschädigt und kann weiter verwendet werden. Vorzugsweise kann das Zwischenelement beispielsweise auch mit dem Schallkörper gekoppelt bleiben, während die Anregeeinheit ausgetauscht wird. Insbesondere ist vorgesehen, dass das Zwischenelement mit der Schraubverbindung, beispielsweise mit einer oder mehreren Schrauben an der Anregeeinheit befestigt wird. Es kann aber auch sein, dass das Zwischenelement stoffschlüssig, beispielsweise durch eine Verklebung oder eine aushärtende Spachtelmasse an der Anregeeinheit befestigt wird. Möglich ist aber auch, dass das Zwischenelement durch verschiedene Arten von Clipsen an der Anregeeinheit befestigt wird.

Die Erfindung betrifft auch ein Kraftfahrzeug mit einem erfindungsgemäßen Körperschallaktuator.

Das Kraftfahrzeug ist dabei vorzugsweise als Personenkraftwagen ausgebildet. Der Körperschallaktuator ist vorzugsweise an einem von der Fahrgastzelle des Kraftfahrzeugs aus nicht sichtbaren Bereich des Kraftfahrzeugs angeordnet.

Vorzugsweise ist es vorgesehen, dass der Körperschallaktuator, insbesondere ausschließlich, mit einer Ankopplungsseite eines Zwischenelements an einem Schallkörper angekoppelt ist, wobei der Schallkörper als ein Innenraumverkleidungsteil des Kraftfahrzeugs ausgebildet ist. Das Innenraumverkleidungsteil ist dabei beispielsweise als Türinnenverkleidung, Cockpitverkleidung, Dachinnenverkleidung, Radkastenverkleidung, Säulenverkleidung oder Sitzverkleidung ausgebildet. Vorzugsweise ist der Körperschallaktuator an einer Innenseite des Innenraumverkleidungsteils befestigt und somit für einen der Fahrgastzelle des Kraftfahrzeugs ansässigen Insassen nicht zu sehen. Die Innenseite des Verkleidungsteils ist also insbesondere dem Bauteil des Kraftfahrzeugs, welches dadurch verkleidet wird, zugewandt.

Vorzugsweise ist der Körperschallaktuator ein Bestandteil eines Audio-Systems des Kraftfahrzeugs zur Fahrzeuginsassenunterhaltung.

Vorteilhafte Ausführungen des Körperschallaktuators sind als vorteilhafte Ausführungen des Kraftfahrzeugs anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombination oder in Alleinstellung verwendbar, ohne den Rahmen der Erfindung zu verlassen.

Ausführungsbeispiele der Erfindung werden nachfolgend anhand schematischer Zeichnungen näher erläutert.

Es zeigen:
- Fig. 1: eine schematische Draufsichtdarstellung eines Ausführungsbeispiels eines erfindungsgemäßen Kraftfahrzeugs mit einem Körperschallaktuator;
- Fig. 2: eine schematische Darstellung eines Ausführungsbeispiels des Körperschallaktuators mit einem Zwischenelement;
- Fig. 3: eine schematische Darstellung eines Ausführungsbeispiels des Zwischenelements mit einem Mittelstück, vier Stegen und einem Montagebereich;
- Fig. 4: eine schematische Darstellung eines Ausführungsbeispiels des Zwischenelements mit einer Vorspannung; und
- Fig. 5: eine schematische Darstellung eines Ausführungsbeispiels des Zwischenelements mit zwei Stäben.

In den Figuren werden gleiche oder funktionsgleiche Elemente mit den gleichen Bezugszeichen versehen.

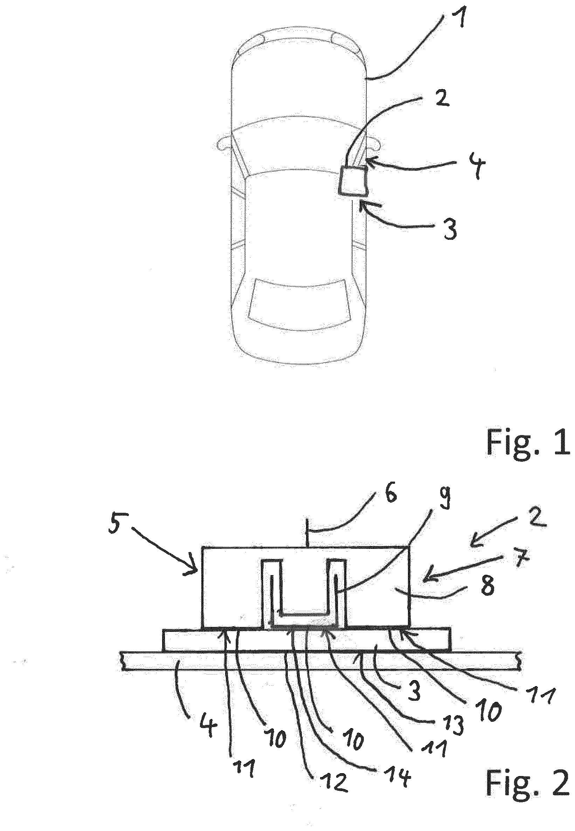

In Fig. 1 ist in einer schematischen Draufsichtdarstellung ein Kraftfahrzeug 1 mit einem Körperschallaktuator 2 gezeigt.

Gemäß dem Ausführungsbeispiel ist der Körperschallaktuator 2 über ein Zwischenelement 3 mit einem Innenraumverkleidungsteil 4 des Kraftfahrzeugs 1 gekoppelt.

Der Körperschallaktuator 2 kann aber auch mit einem beliebigen Bauteil des Kraftfahrzeugs 1 gekoppelt sein. Vorliegend ist das Innenraumverkleidungsteil 4 als Türinnenraumverkleidung ausgebildet.

Der Körperschallaktuator 2 ist also lediglich über das Zwischenelement 3 mit dem als Schallkörper ausgebildeten Innenraumverkleidungsteil 4 verbunden. Eine von dem Körperschallaktuator 2 abgegebene Bewegungsenergie wird dann über das Zwischenelement 3 in das Innenraumverkleidungsteil 4 eingekoppelt. Das Innenraumverkleidungsteil 4 regt dann vorzugsweise die sich im Innenraum des Kraftfahrzeugs 1 befindliche Luft an und erzeugt Schall bzw. ein Geräusch im Bereich von Hörschall.

Die Anordnung des Körperschallaktuators 2 ist im Kraftfahrzeug 1 in vielfältiger Weise möglich. Es können auch mehrere Körperschallaktuatoren 2 im Kraftfahrzeug 1 angeordnet werden. Die Anordnung kann beispielsweise hinter Verkleidungsteilen des Innenraums erfolgen oder aber an einer Glasfläche, einem Karosserieteil, beispielsweise einer Spritzschutzwand, welche einen Motorraum des Kraftfahrzeugs 1 von einer Fahrgastzelle des Kraftfahrzeugs 1 abtrennt, oder an einem Längsträger oder einem Querträger einer Karosserie des Kraftfahrzeugs angeordnet sein.

Fig. 2 zeigt ein Ausführungsbeispiel des Körperschallaktuators 2. Der Körperschallaktuator 2 weist ein Gehäuse 5, eine Energieversorgungsschnittstelle 6 und eine elektrodynamische Anregeeinheit 7 auf. Das Gehäuse 5 umgibt die Anregeeinheit 7 zumindest teilweise und schützt diese beispielsweise vor Eindringen von Schmutz und sonstiger Verunreinigung. Die Energieversorgungsschnittstelle 6 ist dazu eingerichtet mit einer Energieversorgungsquelle des Kraftfahrzeugs 1 verbunden zu werden. Über die Energieversorgungsschnittstelle 6 wird die benötigte Energie für die Anregeeinheit 7 bereitgestellt.

Die Anregeeinheit 7 weist gemäß dem Ausführungsbeispiel ein Magnetelement 8 und ein Spulenelement 9 auf. Das Magnetelement 8 ist relativ zu dem Spulenelement 9 bewegbar ausgebildet. Durch Anlegen von elektrischer Energie an die Energieversorgungsschnittstelle 6 wird das Magnetelement 8 bezüglich dem Spulenelement 9 bewegt.

Gemäß dem Ausführungsbeispiel weist die Anregeeinheit 7 eine Anregeseite 10 auf. Die Anregeseite 10 ist zum Anregen des Innenraumverkleidungsteils 4 ausgebildet. Weiterhin wird die Anregeseite 10 durch das Magnetelement 8 und/oder das Spulenelement 9 bereitgestellt.

An der Anregeseite 10 ist das Zwischenelement 3 befestigt. Das Zwischenelement 3 ist dabei an dem Magnetelement 8 und/oder dem Spulenelement 9 befestigt. Ergänzend oder alternativ kann das Zwischenelement 3 auch an dem Gehäuse 5 befestigt sein.

Die Anregeseite 10 ist insbesondere als Fläche ausgebildet, um Bewegungsenergie an das Zwischenelement 3 abzugeben bzw. dieses anzuregen. Zum Anregen bewegt sich das Spulenelement 9 relativ zum Magnetelement 8 auf das Zwischenelement 3 zu oder von dem Zwischenelement 3 weg. Die Bewegung des Spulenelements 9 erfolgt insbesondere im Bereich von 16 Hz bis 20 kHz.

Das Zwischenelement 3 ist mit einer zerstörungsfrei wieder lösbaren Verbindung 11 an der Anregeeinheit 10 befestigt. Die zerstörungsfrei wieder lösbare Verbindung 11 ist vorzugsweise als Schraubverbindung ausgebildet. So kann das Zwischenelement 3 mit einer oder mehreren Schrauben an der Anregeeinheit 7 befestigt werden. In weiteren nicht dargestellten Ausführungsbeispielen kann das Zwischenelement 3 aber beispielsweise auch mit der Anregeeinheit 7 verklebt sein oder durch verschiedene Arten von Clipsen bzw. Klammern an der Anregeeinheit 7 befestigt sein. Das Zwischenelement kann aber auch mit einer aushärtenden Spachtelmasse an der Anregeeinheit 7 befestigt sein. Die wieder lösbare Verbindung liegt dabei zwischen dem Zwischenelement 3 und dem Magnetelement 8 und/oder dem Zwischenelement 3 und dem Spulenelement 9 vor.

Das Zwischenelement 3 weist eine der Anregeseite 10 abgewandte Ankopplungsseite 12 auf. Die Ankopplungsseite 12 ist zum Koppeln mit dem Innenraumverkleidungsteil 4 eingerichtet. Gemäß dem Ausführungsbeispiel von Fig. 2 ist das Innenraumverkleidungsteil 4 an der Ankopplungsseite 12 mit dem Zwischenelement 3 gekoppelt. Das Innenraumverkleidungsteil 4 wird dadurch nicht direkt durch die Anregeeinheit 7 kontaktiert. Die Bewegungsenergieeinheit von der Anregeeinheit 7 in das Innenraumverkleidungsteil 4 erfolgt ausschließlich über das Zwischenelement 3. Durch das Zwischenelement 3 wird die Krafteinleitung in das Innenraumverkleidungsteil 4 angepasst. So kann durch das Zwischenelement 3 beispielsweise eine Frequenz in bestimmten Bereichen des von der Anregeeinheit 7 abgegebenen Frequenzspektrums unterdrückt oder erhöht werden. Das Zwischenelement 3 beeinflusst also insbesondere aufgrund von seiner Materialeigenschaft und/oder seiner Geometrie die Abstrahlung zum Innenraumverkleidungsteil 4 hinsichtlich eines energiespezifischen Wirkungsgrades und/oder einer Bandbreite der abgegebenen Frequenz.

Durch die angepasste Krafteinleitung über das Verbindungselement 3 und einem daraus folgenden höheren Wirkungsgrad und/oder einer breiteren oder schmaleren spektralen Bandbreite lässt sich der Körperschallaktuator 2, welcher auch als Flächenstrahler bezeichnet wird, im Hinblick auf seine Größe und seines Energiehaushalts effizienter nutzen, als dies bei einem Körperschallaktuator 2 ohne das Zwischenelement 3, welcher also direkt an das Innenraumverkleidungsteil 4 angebunden ist, der Fall ist.

Weiterhin kann dadurch beispielsweise auch Gewicht und/oder Bauraum eingespart werden. Es können dadurch beispielsweise weniger und/oder kleinere Körperschallaktuatoren 2 genutzt werden, als dies im Vergleich zu einer zwischenelementlosen Kopplung mit dem Innenraumverkleidungsteil 4 notwendig wäre, um die gleiche Menge Schall beziehungsweise gleiche akustische Performanz zu erzeugen.

Erfindungsgemäß ist es vorgesehen, dass eine Fläche 13 der Ankopplungsseite 12 größer ist als eine Fläche 14 der Anregeseite 10. Die Fläche 14 der Anregeseite 10 kann sich dabei beispielsweise aus dem Spulenelement 9 und/oder dem Magnetelement 8 ergeben. Die Kopplung zwischen dem Zwischenelement 3 und dem Innenraumverkleidungsteil 4 erfolgt beispielsweise auch über eine reversible Verbindung oder aber über eine stoffschlüssige Verbindung.

Das Zwischenelement 3 ist vorzugsweise separat von dem Innenraumverkleidungsteil 4 ausgebildet. Somit ist das Zwischenelement 3 also kein Bestandteil bzw. keine Schicht des Innenraumverkleidungsteils 4.

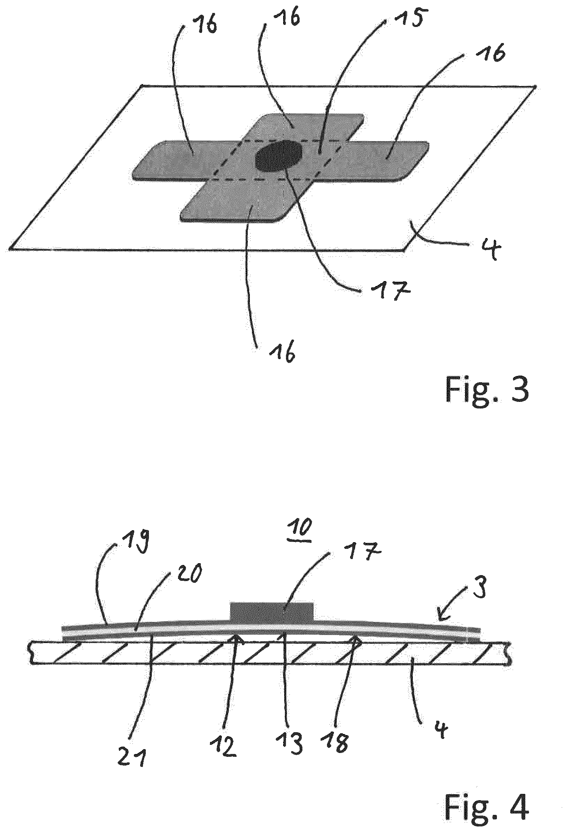

Fig. 3 zeigt ein Ausführungsbeispiel des Zwischenelements 3 gekoppelt mit dem Innenraumverkleidungsteil 4. Gemäß diesem Ausführungsbeispiel weist das Zwischenelement 3 ein rechteckiges Mittelstück 15 auf. Vorliegend ist das Mittelstück 15 sogar quadratisch. Von dem Mittelstück 15 gehen in derselben Ebene wie dem Mittelstück 15 vier Stege 16 ab. Die Anzahl der Stege 16 kann variieren, vorzugsweise sind allerdings mindestens zwei Stege 16 vorgesehen. Gemäß dem Ausführungsbeispiel sind die Stege 16 so breit wie das Mittelstück 15. Die jeweilige Breite der Stege 16 bezüglich des Mittelstücks 15 kann aber ebenfalls variieren. So kann der Steg 16 beispielsweise breiter oder schmäler als das Mittelstück 15 sein. Vorliegend ergeben die Stege 16 mit dem Mittelstück 15 eine Kreuzform. Gemäß dem Ausführungsbeispiel ist es weiterhin vorgesehen, dass eine Außenkontur des Zwischenelements 3 Rundungen an dem vom Mittelstück 15 weg gerichteten Enden der Stege 16 aufweist. In einem weiteren nicht dargestellten Ausführungsbeispiel kann das Mittelstück 15 allerdings auch Ecken anstatt der Rundungen aufweisen.

Gemäß dem Ausführungsbeispiel weist das Zwischenelement 3 auch einen Montagebereich 17 auf. Der Montagebereich 17 ist gemäß dem Ausführungsbeispiel von Fig. 3 auf dem Mittelstück 15 angeordnet. Der Montagebereich 17 ist insbesondere zylinderförmig ausgebildet und zum Anbringen des Zwischenelements 3 an der Anregeeinheit 7 eingerichtet. Durch die Ausgestaltung des Zwischenelements mit dem Mittelstück 15 und den Stegen 16 kann die spektrale Bandbreite der von der Anregeeinheit 7 abgegebenen Energie besonders feingradig angepasst werden.

Fig. 4 zeigt ein weiteres Ausführungsbeispiel des Zwischenelements 3. Das Zwischenelement 3 weist eine Vorspannung 18 auf. Durch die Vorspannung 18 ist das Zwischenelement 3 zum Innenraumverkleidungsteil 4 hin gerichtet konkav gekrümmt, falls es im entkoppelten Zustand bzw. im unmontierten Zustand vorliegt. Im gekoppelten bzw. montierten Zustand liegt das Zwischenelement 3 vorzugsweise vollständig mit der Fläche 13 der Ankopplungsseite 12 an dem Innenraumverkleidungsteil 4 an. Vorzugsweise wird das Zwischenelement 3 also in gekoppelten Zustand an das Innenraumverkleidungsteil 4 hingedrückt bzw. angepresst. Durch die Vorspannung 18 kann der Frequenzbereich der von der Anregeeinheit 7 abgegebenen Energie wiederum vielfältig angepasst werden. Es können beispielsweise einzelne Frequenzbereiche abgesenkt oder erhöht werden. Es kann aber beispielsweise auch das gesamte Frequenzspektrum durch das Zwischenelement 3 erweitert werden. Weiterhin kann durch die Vorspannung 18 beispielsweise Einfluss auf das Innenraumverkleidungsteil 4 genommen werden. So kann durch die Vorspannung beispielsweise im äußeren Bereich des Zwischenelements 3, in welchem die durch die Vorspannung resultierende Kraft auf das Innenraumverkleidungsteil 4 größer ist, genutzt werden, um in diesen Bereichen andere Frequenzen in das Innenraumverkleidungsteil 4 einzukoppeln als im mittleren Bereich des Zwischenelements 3.

Weiterhin ist das Zwischenelement gemäß dem Ausführungsbeispiel von Fig. 4 mit einer ersten Materialschicht 19, einer zweiten Materialschicht 20 und einer dritten Materialschicht 21 ausgebildet. Die Materialschichten 19, 20, 21 sind gemäß dem Ausführungsbeispiel gleichmäßig dick ausgebildet und gleichmäßig zur Ankopplungsseite 12 verlaufend. Die Materialschichten 19, 20, 21 können dabei beispielsweise aus dem gleichen Werkstoff oder aber aus unterschiedlichen Werkstoffen ausgebildet sein. So können die Materialschichten beispielsweise aus Vollmaterial, Hartschaum, Glas, Plexiglas, Aluminium, Ureol, Karbon, Holz oder Glasfaser ausgebildet sein. Gemäß dem Ausführungsbeispiel kontaktiert lediglich die dritte Materialschicht 21 das Innenraumverkleidungsteil 4. Durch die Materialschichten 19, 20, 21 kann beispielsweise die Vorspannung 18 erzeugt werden.

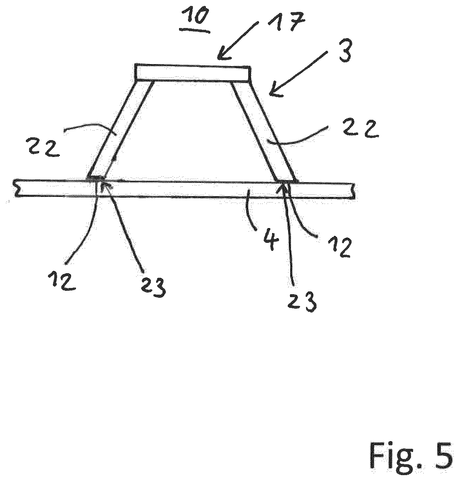

Fig. 5 zeigt ein weiteres Ausführungsbeispiel des Zwischenelements 3. Das Zwischenelement 3 weist zwei von der Anregeseite 10 weg gerichtete Stäbe 22 auf. Die Ankopplungsseite 12 ist bei diesem Ausführungsbeispiel ausschließlich durch von der Anregeseite 10 weg gerichtete Enden 23 der Stäbe 22 ausgebildet.

Es können auch mehr als die in Fig. 5 gezeigten Stäbe 22 von dem Zwischenelement 3 bereitgestellt werden. So kann das Zwischenelement 3 beispielsweise mit einer Vielzahl von Stäben 22 ausgebildet sein und dadurch eine spinnenartige bzw. korbartige Form einnehmen.

Das Zwischenelement 3 kann beispielsweise auch aus Metall bzw. hybriden Kunststoff ausgebildet sein.

Es kann beispielsweise auch sein, dass aus dem Zwischenelement 3 partielle Bereiche herausgeschnitten sind und das Zwischenelement 3 dadurch gitterartig oder porös vorliegt. Zudem ist es beispielsweise möglich, dass das Zwischenelement 3 eine Wabenstruktur aufweist, bei der die Waben gleichmäßig oder aber in unterschiedlicher Form und unterschiedlicher Größe ausgebildet sein können.

Durch das Zwischenelement 3 wird also eine Frequenzanpassung für von der Anregeeinheit 7 abgegebene Frequenzen durchgeführt. Die Krafteinleitung in das Innenraumverkleidungsteil 4 kann durch das Zwischenelement 3 in vielfältiger Weise abhängig von Geometrie und Material des Zwischenelements 3 erfolgen.

### Bezugszeichenliste

- 1: Kraftfahrzeug
- 2: Körperschallaktuator
- 3: Zwischenelement
- 4: Innenraumverkleidungsteil
- 5: Gehäuse
- 6: Energieversorgungsschnittstelle
- 7: Anregeeinheit
- 8: Magnetelement
- 9: Spulenelement
- 10: Anregeseite
- 11: lösbare Verbindung
- 12: Ankopplungsseite
- 13: Fläche der Ankopplungsseite
- 14: Fläche der Anregeseite
- 15: Mittelstück
- 16: Steg
- 17: Montagebereich
- 18: Vorspannung
- 19: erste Materialschicht
- 20: zweite Materialschicht
- 21: dritte Materialschicht
- 22: Stäbe
- 23: Enden der Stäbe

## Patentansprüche

1. Körperschallaktuator (2) für ein Kraftfahrzeug (1), welcher eine elektrodynamische Anregeeinheit (7) umfasst, und die Anregeeinheit (7) mit einer Anregeseite (10) eingerichtet zum Anregen eines Schallkörpers (4) ausgebildet ist,
**dadurch gekennzeichnet, dass**
ein akustisch starres Zwischenelement (3) an der Anregeseite (10) befestigt ist und das Zwischenelement (3) eine der Anregeseite (10) abgewandte Ankopplungsseite (12) eingerichtet zum Koppeln mit dem Schallkörper (4) aufweist,
wobei das Zwischenelement (3) flächig ausgebildet ist und eine Fläche (13) der Ankopplungsseite (12) größer als eine Fläche (14) der Anregeseite (10) ist, **dadurch gekennzeichnet, dass**
das Zwischenelement (3) mit einer Vorspannung (18) ausgebildet ist und die Ankopplungsseite (12) im entkoppelten Zustand gekrümmt ist.

2. Körperschallaktuator (2) nach Anspruch 1,
**dadurch gekennzeichnet, dass**
das Zwischenelement (3) in der Ebene der Ankopplungsseite (12) ein rechteckiges Mittelstück (15) und zumindest zwei voneinander beabstandete und vom Mittelstück (15) abgehende Stege (16) aufweist.

3. Körperschallaktuator (2) nach einem der vorhergehenden Ansprüche ,
**dadurch gekennzeichnet, dass**
das Zwischenelement (3) zumindest zwei von der Anregeseite (10) der Anregeeinheit (7) weg gerichtete Stäbe (22) aufweist und die Ankopplungsseite (12) nur durch von der Anregeseite (10) weg gerichtete Enden (23) der Stäbe (22) ausgebildet ist.

4. Körperschallaktuator (2) nach einem der vorhergehenden Ansprüche,
**dadurch gekennzeichnet, dass**
das Zwischenelement (3) mit zumindest zwei zur Ankopplungsseite (12) gleichmäßig beabstandet verlaufenden Materialschichten (19, 20, 21) ausgebildet ist.

5. Körperschallaktuator (2) nach einem der vorhergehenden Ansprüche,
**dadurch gekennzeichnet, dass**
das Zwischenelement (3) einen auf einer der Ankopplungsseite (12) gegenüberliegenden Seite erhaben ausgebildeten Montagebereich (17) eingerichtet zum Anbringen des Zwischenelements (3) an der Anregeeinheit (7) aufweist.

6. Körperschallaktuator (2) nach einem der vorhergehenden Ansprüche,
**dadurch gekennzeichnet, dass**
das Zwischenelement (3) mit einer zerstörungsfrei wieder lösbaren Verbindung (11) an der Anregeseite (10) der Anregeeinheit (7) befestigt ist.

7. Kraftfahrzeug (1) mit einem Körperschallaktuator (2) nach einem der vorhergehenden Ansprüche.

8. Kraftfahrzeug (1) nach Anspruch 7,
**dadurch gekennzeichnet, dass**
der Körperschallaktuator (2) mit einer Ankopplungsseite (12) eines Zwischenelements (3) an einen Schallkörper angekoppelt ist, wobei der Schallkörper als ein Innenraumverkleidungsteil (4) des Kraftfahrzeugs (1) ausgebildet ist.

## Claims

1. Structure-borne sound actuator (2) for a motor vehicle (1), which comprises an electro-dynamic excitation unit (7), and the excitation unit (7) is formed with an excitation side (10) configured to excite an acoustic body (4),
**characterized in that**
an acoustically rigid intermediate element (3) is secured to the excitation side (10) and the intermediate element (3) has a coupling side (12), which faces away from the excitation side (10), and is configured for coupling to the acoustic body (4), the intermediate element (3) being planar in design and a surface area (13) of the coupling side (12) being greater than a surface area (14) of the excitation side (10),
**characterized in that**
the intermediate element (3) is designed with an initial tension (18) and the coupling side (12) is curved in the decoupled state.

2. Structure-borne sound actuator (2) according to Claim 1,
**characterized in that**
the intermediate element (3) has a rectangular centrepiece (15) in the plane of the coupling side (12), and at least two crosspieces (16), spaced apart from each other and extending away from the centrepiece (15).

3. Structure-borne sound actuator (2) according to either one of the preceding claims,
**characterized in that**
the intermediate element (3) has at least two bars (22) directed away from the excitation side (10) of the excitation unit (7), and the coupling side (12) is formed only by ends (23) of the bars (22) directed away from the excitation side (10).

4. Structure-borne sound actuator (2) according to any one of the preceding claims,
**characterized in that**
the intermediate element (3) is designed with at least two material layers (19, 20, 21) extending at equal distances from the coupling side (12).

5. Structure-borne sound actuator (2) according to any one of the preceding claims,
**characterized in that**
the intermediate element (3) has a raised mounting region (17), on a side opposite the coupling side (12) and configured for attaching the intermediate element (3) to the excitation unit (7).

6. Structure-borne sound actuator (2) according to any one of the preceding claims,
**characterized in that**
the intermediate element (3) is secured with a non-destructively releasable connection (11) to the excitation side (10) of the excitation unit (7).

7. Motor vehicle (1) having a structure-borne sound actuator (2) according to any one of the preceding claims.

8. Motor vehicle (1) according to Claim 7,
**characterized in that**
the structure-borne sound actuator (2) is coupled using one coupling side (12) of an intermediate element (3) to an acoustic body, the acoustic body being designed as an interior trim part (4) of the motor vehicle (1).

## Revendications

1. Actionneur de bruit solidien (2) pour un véhicule automobile (1), qui comprend une unité d'excitation (7) électrodynamique, et l'unité d'excitation (7) est configurée avec un côté d'excitation (10) conçu pour exciter un corps sonore (4),
**caractérisé en ce que**
un élément intermédiaire (3) acoustiquement rigide est fixé sur le côté d'excitation (10) et l'élément intermédiaire (3) possède un côté de couplage (12) opposé au côté d'excitation (10) conçu pour le couplage avec le corps sonore (4),
l'élément intermédiaire (3) étant de configuration plane et une surface (13) du côté de couplage (12) étant plus grande qu'une surface (14) du côté d'excitation (10), **caractérisé en ce que**
l'élément intermédiaire (3) est réalisé avec une précontrainte (18) et le côté de couplage (12) est courbé à l'état découplé.

2. Actionneur de bruit solidien (2) selon la revendication 1,
**caractérisé en ce que**
l'élément intermédiaire (3) possède, dans le plan du côté de couplage (12), une pièce centrale (15) rectangulaire et au moins deux nervures (16) espacées l'une de l'autre et partant de la pièce centrale (15).

3. Actionneur de bruit solidien (2) selon l'une des revendications précédentes,
**caractérisé en ce que**
l'élément intermédiaire (3) possède au moins deux barres (22) orientées à l'opposé du côté d'excitation (10) de l'unité d'excitation (7) et le côté de couplage (12) est formé uniquement par des extrémités (23) des barres (22) orientées à l'opposé du côté d'excitation (10).

4. Actionneur de bruit solidien (2) selon l'une des revendications précédentes,
**caractérisé en ce que**
l'élément intermédiaire (3) est réalisé avec au moins deux couches de matériau (19, 20, 21) qui s'étendent à distance régulière par rapport au côté de couplage (12).

5. Actionneur de bruit solidien (2) selon l'une des revendications précédentes,
**caractérisé en ce que**
l'élément intermédiaire (3) présente une zone de montage (17) configurée en relief sur un côté opposé au côté de couplage (12), conçue pour le montage de l'élément intermédiaire (3) sur l'unité d'excitation (7).

6. Actionneur de bruit solidien (2) selon l'une des revendications précédentes,
**caractérisé en ce que**
l'élément intermédiaire (3) est fixé sur le côté d'excitation (10) de l'unité d'excitation (7) par une liaison (11) qui est de nouveau libérable sans destruction.

7. Véhicule automobile (1) comprenant un actionneur de bruit solidien (2) selon l'une des revendications précédentes.

8. Véhicule automobile (1) selon la revendication 7,
**caractérisé en ce que**
l'actionneur de bruit solidien (2) est couplé à un corps sonore par un côté de couplage (12) d'un élément intermédiaire (3), le corps sonore étant réalisé sous la forme d'une pièce d'habillage intérieur (4) du véhicule automobile (1).
